# DEMANDE DE BREVET EUROPEEN

(11) **EP 1 930 304 A1**
(43) Date de publication de la demande: **11.06.2008**
(21) Numéro de dépôt: 07301637.0
(22) Date de dépôt: 06.12.2007
(51) Int. Cl.: C04B 28/04, E01C 7/14

(54) **Liant reactif a durcissement a froid et son utilisation**

(30) Priorité: 07.12.2006 FR 0655365
(71) Demandeur: COLAS, 92100 Boulogne-Billancourt (FR)
(72) Inventeur: Durand Graziella, 78460, CHEVREUSE (FR); Travier David, 91300, MASSY (FR)
(74) Mandataire: Catherine, Alain

(57) **Abrégé**

La présente invention a pour objet une composition de liant réactif à durcissement à froid consistant en :
- un liant de base ayant une viscosité inférieure à 1500 mPa.s à 20°C, constitué par un mélange d'acides gras,
- au moins un adjuvant réactif capable de réagir de manière adéquate avec le liant de base, et
- au moins un activateur capable d'amorcer la réaction.

Les acides gras utilisés en tant que liant de base dans la présente invention, se substituent avantageusement aux liants de base usuels à base de bitume ou de poix.

## Description

La présente invention concerne un liant réactif durcissant à froid destiné à la réalisation d'enrobés à froid pour couche de roulement.

Les bitumes et liants bitumineux, utilisés comme liant pour la réalisation d'enrobés comprennent par exemple le bitume polymère, les goudrons, les poix, les résidus de distillation de graisses et huiles naturelles, comme la poix de stéarine, des résines naturelles et synthétiques telles que la résine de houille, les cires et paraffines. Ces bitumes et liants bitumineux présentent une viscosité élevée à température ambiante. Pour pouvoir utiliser ces bitumes et liants bitumineux comme liant, il est nécessaire de les traiter, afin d'obtenir un abaissement temporaire de leur viscosité, pour les raisons exposées ci-après.

De manière générale, la réalisation d'un enrobé se déroule selon les étapes suivantes. Tout d'abord, la viscosité du liant utilisé pour réaliser l'enrobé est abaissée temporairement, pendant une période de temps suffisamment longue pour pouvoir (i) préparer un mélange intime du liant et de granulats, et (ii) réaliser un épandage de l'enrobé ainsi obtenu. La viscosité du liant est ensuite amenée à augmenter, pour permettre un durcissement de l'enrobé, avant la mise sous circulation.

Habituellement, on obtient une diminution de la viscosité par chauffage du liant, émulsification du liant ou dissolution de celui-ci avec des solvants organiques appropriés. Ces procédés présentent cependant de nombreux désavantages. Le chauffage consomme beaucoup d'énergie, et l'émulsification du liant rend les produits sensibles au gel et nécessite, après application de l'enrobé, des durées de durcissement ou mûrissement assez longs, liés au temps nécessaire pour l'évaporation de l'eau provenant de l'émulsion. Enfin, l'évaporation des solvants organiques contenus dans le liant, intervenant après application de l'enrobé, comporte un grand risque pour l'environnement.

Un autre type de liant a été mis au point dans la demande de brevet AT406375B, le liant décrit comprend notamment un agent de fluxage, permettant de réduire la viscosité des bitumes et liants bitumineux. Le liant décrit dans cette demande de brevet, comprend en outre, en plus du liant bitumineux en tant que tel et de l'agent de fluxage, deux autres composants, à savoir un adjuvant réactif, par exemple une huile, et un activateur tel que la chaux.

Ce type de liant est donc complexe à mettre au point puisqu'il nécessite l'utilisation d'au moins quatre composants, à savoir :
- un bitume ou liant bitumineux, de viscosité élevée, à titre de liant de base,
- un agent de fluxage permettant de réduire la viscosité du bitume ou du liant bitumineux,
- un adjuvant réactif, réduisant l'effet de l'agent de fluxage après application de l'enrobé,
et un activateur déclenchant ou accélérant la réaction.

Les inventeurs ont mis au point un liant pour couche de roulement ne présentant pas les inconvénients mentionnés ci-dessus.

L'invention a donc pour objet un liant réactif à durcissement à froid.

Selon l'invention, ledit liant comprend :
- un liant de base ayant une viscosité inférieure à 1500 mPa.s à 20°C, constitué par un mélange d'acides gras,
- au moins un adjuvant réactif capable de réagir de manière adéquate avec le liant de base, et
- au moins un activateur capable d'amorcer la réaction.

La viscosité du liant de base, inférieure à 1500 mPa.s, est une viscosité dynamique, mesurée par un appareillage de type Brookfield, sous agitation à 50 tr/min avec un mobile de type SC21.

Par adjuvant réactif capable de réagir de manière adéquate avec le liant de base, on entend au sens de la présente invention, que l'adjuvant réactif peut provoquer une augmentation de la viscosité du liant de base, lorsqu'il est mis en présence du liant de base et de l'activateur.

Les acides gras utilisés en tant que liant de base dans la présente invention, se substituent avantageusement aux liants de base usuels à base de bitume ou de poix.

En effet, la viscosité des acides gras utilisés comme liant de base dans l'invention permet une utilisation du liant objet de l'invention à température ambiante, sans chauffage extérieur, et un stockage à long terme.

Lorsque les trois éléments principaux entrant dans la composition du liant objet de l'invention sont mélangés, à savoir le liant de base, l'adjuvant réactif et l'activateur, on observe une augmentation de la viscosité du mélange, par rapport à la viscosité du liant de base seul. Le durcissement à froid du liant objet de l'invention est caractérisé par une forte augmentation de viscosité, est irréversible et conduit à un liant ayant une consistance comparable aux liants bitumineux connus, décrits ci-dessus, utilisés habituellement dans le domaine des travaux publics.

De manière générale, le liant objet de l'invention peut être mélangé à des granulats, et utilisé pour la réalisation d'enrobés à froid pour couche de roulement, d'enrobé coulé à froid ou encore d'asphalte à froid.

Dans la suite de la description, ces applications sont désignés sous le terme général « enrobé ».

De préférence, l'adjuvant réactif se présente sous la forme d'une poudre ou sous la forme d'un liquide et est choisi parmi un complexant organique ou inorganique, un anhydride d'acide, une amine grasse, un sel inorganique de cations et anions mono ou polyvalents, un ciment, de la chaux, du plâtre, de la dolomite, un laitier, un verre, un silicate alcalin, un gel de silice, de l'alun, et leurs mélanges.

Par ciment, on entend au sens de la présente invention, un ciment Portland, un ciment Portland composé, un ciment de haut fourneau, un ciment pouzzolanique, un ciment au laitier et aux cendres, mais également un ciment spécial, tel qu'un ciment à prise rapide.

De préférence, l'activateur est choisi parmi l'eau, un glycol, un alcool gras, un tensio actif, un acide organique ou inorganique, une base, un sel métallique, du soufre et ses composés, un peroxyde, un latex, une dispersion de résine synthétique, et leurs mélanges.

De préférence, le liant de base est constitué d'un mélange d'acides gras saturé(s) ou insaturé(s), monocarboxyliques comprenant 6 à 24 atomes de carbone, dicarboxyliques comprenant 12 à 48 atomes de carbone et/ou tricarboxylique(s) comprenant 18 à 72 atomes de carbone.

De préférence, les acides gras sont isolés ou dérivés du tall oil ou d'une huile végétale choisie parmi les huiles végétales naturelles et les huiles végétales modifiées, et par exemple parmi l'huile de soja, l'huile de lin, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de maïs, l'huile de noix, l'huile d'amande, l'huile de palme, l'huile de sésame et leurs mélanges.

A titre d'exemple les acides gras saturés linéaires peuvent être choisis parmi l'acide caproïque, l'acide caprylique, l'acide caprique, l'acide laurique, l'acide myristique, l'acide palmitique, l'acide margarique, l'acide stéarique, l'acide arachidique, l'acide béhénique, et l'acide lignocérique.

A titre d'exemple les acides gras insaturés monocarboxyliques peuvent être choisis parmi l'acide palmitoléique, l'acide oléique, l'acide vaccénique, l'acide linoléique, l'acide linolénique, l'acide arachidonique, l'acide eicosapentaénoïque, l'acide érucique, l'acide docosahexaénoïque, l'acide nervonique, et l'acide nonanonique.

Les acides gras définis ci-dessus sont des acides gras monocarboxyliques convenant à la réalisation d'un liant de base conforme à l'invention.

Des acides gras convenant également à la réalisation d'un liant de base conforme à l'invention sont des acides gras polymérisés, qui comprennent plus d'une fonction carboxylique, et se présentent par exemple sous forme d'acides gras sous forme de dimères ou de trimères.

A titre d'exemple d'acides gras dicarboxyliques sous forme de dimères, convenant aussi à la réalisation d'un liant de base conforme à l'invention on peut citer les acides gras comprenant 12 à 48 atomes de carbones saturés ou insaturés, de préférence insaturés et en particulier l'acide gras insaturé comprenant 18 atomes de carbones dont la référence CAS est 61788-89-4.

Enfin, à titre d'exemple d'acides gras tricarboxyliques, sous forme de trimères convenant à la réalisation d'un liant de base conforme à l'invention on peut citer les acides gras comprenant 18 à 72 atomes de carbones saturés ou insaturés, de préférence insaturés et en particulier l'acide gras insaturé comprenant 18 atomes de carbones dont la référence CAS est 68937-90-6.

De manière préférée, le liant de base comprend un premier type d'acide gras, servant d'agent fluxant, permettant de diminuer la viscosité globale du liant réactif objet de l'invention.

A titre d'exemple de ce premier type d'acide gras, on peut citer un acide gras monocarboxylique tel que défini ci-dessus et en particulier un acide gras comprenant 6 à 24 atomes de carbones, saturé tel que l'acide stéarique ou insaturé tel que l'acide oléique. Dans le mode de réalisation défini ci-dessus, le liant de base comprendra un second type d'acide gras permettant de donner une bonne cohésion entre les granulats après application de l'enrobé, en augmentant la consistance du liant réactif. A titre d'exemple de ce second type d'acide gras, on peut citer un acide gras dicarboxylique (dimère) ou un acide gras tricarboxylique (trimère) tel que définis ci-dessus, et par exemple un acide gras polymérisé, commercialisé par la société UNIQUEMA sous le nom commercial PRIPOL®.

Ainsi, de préférence, le liant de base comprend :
- au moins un acide gras monocarboxylique, et
- au moins un acide gras polymérisé.

Les proportions massiques d'acides gras monocarboxyliques par rapport aux acides gras polymérisés sont comprises entre 1/1 et 2/1 de préférence 1/1 et 1,7/1.

Pour obtenir un liant de base, conforme à l'invention, c'est à dire présentant une viscosité inférieure à 1500 mPa.s à 20°C, les acides gras peuvent être mélangés et chauffés, par exemple pendant 30 minutes, de sorte à obtenir un mélange homogène.

De préférence, l'adjuvant réactif comprend de la chaux ou du ciment et l'activateur comprend ou est constitué exclusivement d'eau.

De préférence, le liant objet de l'invention comprend en poids par rapport au poids total du liant :
- 25 à 98% de liant de base,
- 0,5 à 55% d'adjuvant réactif, et
- 0,5 à 55% d'activateur.

Comme cela a été décrit ci-dessus, le mélange des trois composants principaux du liant objet de l'invention, à savoir le liant de base, l'adjuvant réactif et l'activateur, provoque une augmentation de la viscosité du liant. En conséquence, l'un au moins des trois composants principaux du liant objet de l'invention doit être ajouté au moment de la réalisation de l'enrobé, pour provoquer un durcissement de l'enrobé après son application.

Ainsi, dans un premier mode de réalisation, avant application, le liant est présent sous la forme d'une première composante comprenant le liant de base et l'adjuvant réactif, et d'une seconde composante comprenant l'activateur.

La réalisation de l'enrobé est alors effectuée selon les étapes successives suivantes :

Le liant de base, et l'adjuvant réactif sont mélangés à des granulats, puis au moment de l'application de l'enrobé, l'activateur est ajouté pour déclencher une réaction conduisant à l'augmentation de la viscosité du liant et par suite, le durcissement de l'enrobé.

Dans un mode de réalisation alternatif, avant application le liant est présent sous la forme d'une première composante comprenant le liant de base, d'une seconde composante comprenant un adjuvant réactif et d'une troisième composante comprenant l'activateur.

Dans ce second mode de réalisation, la réalisation de l'enrobé comprend les étapes successives suivantes :

Le liant de base est mélangé à des granulats, puis au moment de l'application de l'enrobé, l'adjuvant réactif et l'activateur sont ajoutés pour déclencher une réaction conduisant à l'augmentation de la viscosité du liant et par suite, le durcissement de l'enrobé.

Quelle que soit la forme sous laquelle se présente le liant objet de l'invention, c'est à dire sous la forme de deux ou trois composantes, il n'est pas toujours nécessaire d'ajouter d'activateur lors de la réalisation de l'enrobé. En effet, l'humidité naturellement présente dans les granulats utilisés pour réaliser un enrobé à froid peut être suffisante et jouer le rôle d'activateur au moment de la réalisation de l'enrobé.

L'invention a également pour objet un enrobé à froid comprenant au moins un granulat et un liant réactif tel que défini ci-dessus. De préférence, ledit enrobé comprend en poids par rapport au poids total de l'enrobé :
- 70 à 96% d'au moins un granulat, et
- 4 à 30% d'un liant réactif durcissant à froid selon l'invention.

A titre d'exemple, un enrobé à froid réalisé avec un liant réactif tel que défini ci-dessus, comprend, en poids par rapport au poids total de l'enrobé :
- 90 à 96% d'au moins un granulat,
- 4 à 8% de liant de base,
- 0,1 à 5% d'adjuvant réactif, et
- 0,1 à 5% d'activateur.

Alternativement, l'enrobé comprend, en poids par rapport au poids total du liant :
- 70 à 95% d'au moins un granulat,
- 10 à 30%, de préférence 5% à 25%, de liant de base,
- 0,1 à 5% d'adjuvant réactif, et
- 0,1 à 5% d'activateur.

Selon le type d'enrobé à réaliser, le liant selon l'invention peut être additionné d'autres matières. A titre d'exemple, il peut s'agir d'additifs améliorant l'adhérence tels que des composés organiques de silicium, des additifs améliorant le fluage, des siccatifs ou autres matières favorisant la réticulation, diverses matières plastiques compatibles avec le liant, par exemple des élastomères tels que le caoutchouc naturel, un caoutchouc de styrène-butadiène, le polychloroprène et d'autres. Grâce à ces additifs, on obtient d'une part un meilleur pouvoir d'adhérence du liant aux granulats, un meilleur comportement du liant au froid grâce à une diminution de la fragilité du bitume.

L'invention est en outre illustrée par les exemples non limitatifs suivants.

### Exemple 1 : Spécifications d'un liant conforme à l'invention, fabriqué à partir d'un liant de base, d'un adjuvant réactif et d'un activateur.

Performances obtenues 24 heures après mélanges des trois composantes :

| Performance | Norme d'essai | Commentaires | Spécifications |
|---|---|---|---|
| Pénétrabilité (1/10 mm) à 25°C | NF EN 1426 | Liant présentant une consistance identique à celle des liants hydrocarbonés | 20 à 220 |
| Point de ramollissement (°C) | NF EN 1427 | Liant présentant une sensibilité à la température identique à celle des liants hydrocarbonés | 30 à 70 |

### Exemple 2 : Enrobé à froid réalisé à partir d'un liant conforme à l'invention.

### - Principe de confection d'un enrobé à froid à base de ce liant :

Pour confectionner un enrobé, une centrale d'enrobé ou une centrale hydraulique classiques ont été utilisées. Le granulat n'a pas besoin d'être séché. Il est utilisé en l'état. Par contre, la teneur en eau moyenne de la recomposition granulaire doit être connue. Elle doit se situer entre 0,5 et 5 parties en masse pour cent parties de granulats secs. Si la teneur en eau moyenne est inférieure à cette teneur, de l'eau doit être ajoutée dans les granulats avant ou après enrobage avec le liant de base, pour parvenir à la teneur spécifiée ci-dessus.

Le granulat est introduit dans la centrale, l'adjuvant réactif qui peut être sous forme de poudre ou liquide est ajouté, puis le liant de base est ajouté à une teneur appropriée.

L'adjuvant réactif peut bien sûr être introduit après enrobage des granulats par le liant de base.

L'enrobé final doit être maniable au moins deux heures à température ambiante.

### - Formulation type :

- Granulats 0 à 10 mm granularité continue
   ou discontinue : 90 à 96%
- Liant de base : mélange d'acides gras 4 à 8%
- Adjuvant réactif : chaux 0,1 à 5%
- Activateur : eau 0,1 à 5%

### - Exemple de formulation :

Granulats :
0/10 de la Noubleau (granularité continue) : 94,1%
Liant de base :
Mélange d'acides gras monocarboxyliques
et d'acides gras dimères ou trimères * 4,5%
Adjuvant réactif :
Chaux vive : 0,4%
Activateur :
Eau : 1%
*proportion massique acides gras monocarboxyliques / acides gras dimères ou trimères comprise entre 1/1,0 et 1,6/1

### - Spécifications des enrobés à froid fabriqués, selon la norme NF P 98-139.

| Performance | Norme d'essai | Commentaires | Spécifications |
|---|---|---|---|
| Compactabilité (% de vides) | NFP 98-252 | Capacité de l'enrobé à être mis en place avec une compacité spécifiée | Pour 10 girations → ≥ 12 |
| | | | Pour 60 girations → 5 à 12 |
| Résistance mécanique (r) et tenue à l'eau (r/R) | NFP 98-251-4 | Durabilité face aux agressions du trafic et aux risques de désenrobage | r ≥ 4 MPa |
| | | | r/R ≥ 0.7 |

### Exemple 3 : Enrobé coulé à froid (ECF) fabriqué à partir d'un liant conforme à l'invention.

Pour confectionner un enrobé à froid, une machine adéquate est utilisée. Cette machine est souvent composée d'une trémie pour les granulats, une cuve pour l'eau, une cuve pour le liant et une petite trémie pour des pulvérulents.

Le granulat n'a pas besoin d'être séché. Il est utilisé en l'état. Par contre, la teneur en eau moyenne de la recomposition granulaire doit être connue. Elle doit se situer entre 0,5 et 5 parties en masse pour cent parties de granulats secs. Si la teneur en eau moyenne est inférieure à cette teneur, 0,5 parties en masse d'eau pour cent parties de granulats doivent être ajoutés.

L'ordre type d'incorporation est le suivant :
1) Granulats humides
2) Adjuvant réactif
3) Liant de base

L'enrobé coulé à froid qui en découle doit être consistant dans les 30 minutes qui suivent sa fabrication.

### - Formulation type :

- Granulats 0 à 6 mm granularité croissante 70 à 95%
- Liant de base : mélange d'acides gras 10 à 30%
- Adjuvant réactif : ciment 0,1 à 5%
- Activateur : eau 0,1 à 5%

### - Exemple de formulation :

Granulats :
0/10 Nordhouse : 80,5%
Liant de base :
Mélange d'acides gras monocarboxyliques et d'acides gras dimères ou trimères * 14,5%
Adjuvant réactif :
Ciment de type CEM II : 3%
Activateur :
Eau : 1%
*proportion massique acides gras monocarboxyliques / acides gras dimères ou trimères comprise entre 1/1 et 1,4/1

### -Spécifications

| Performance | Norme d'essai | Commentaires | Spécifications |
|---|---|---|---|
| TCS(Test de cohésion superficiel) | Méthode interne à Colas | Ce test permet de mesurer la montée en cohésion des ECF au jeune âge | Rejet inférieur à 150 g après 30 minutes de mûrissement |
| HCT (hilt cohésion test) | Méthode interne à Colas | Ce test permet de mesurer la montée en cohésion des ECF au jeune âge | > 15s |

### - Essai TCS

Le train roulant d'un malaxeur Hobart® est appliqué à la surface d'un ECF fraîchement confectionné et recouvert d'un film d'eau. La mesure du rejet au terme de l'essai permet d'apprécier la cohésion de l'ECF au jeune âge.

### -Essai HCT

Cet essai permet d'évaluer la résistance à la traction et la rupture par torsion des ECF.

Il consiste à fabriquer une éprouvette d'ECF après avoir vérifié la maniabilité de la formule à tester. Après un temps de cure déterminé, l'enrobé est positionné sur l'appareil avec un contrepoids placé sur sa partie fixe. On mesure alors le temps nécessaire à la cassure de l'enrobé après ouverture de la trappe.

### Exemple 4 : Asphalte à froid fabriqué à partir du liant.

Pour confectionner un asphalte à froid, un malaxeur adéquat est utilisé.

Le granulat a besoin d'être séché. Les granulats, le liant de base et l'adjuvant réactif sont mélangés le temps adéquat permettant d'obtenir un asphalte homogène.

L'eau sera ajoutée en dernier lieu lors de l'utilisation de l'asphalte.

L'ordre type d'incorporation est le suivant :
1) Granulats secs
2) Liant de base
3) Adjuvant réactif
4) Eau

### - Formulation type :

- Granulats 0 à 10 mm granularité continue
   ou discontinue : 70 à 95%
- Liant de base : mélange d'acides gras 5 à 25%
- Adjuvant réactif : chaux 0,1 à 5%
- Activateur : eau 0,1 à 5%

### - Exemple de formulation :

Granulats :
0/4 Bernières 40%
2/6 Voutré 31 %
Filler tour blanche (charge calcaire,
de granulométrie inférieure ou égale à 80µm): 12%
Liant de base :
Mélange d'acides gras monocarboxyliques
et d'acides gras dimères ou trimères * 15%
Adjuvant réactif :
Chaux vive : 1,5%
Activateur :
Eau : 0,5%
*proportion massique acides gras monocarboxyliques / acides gras dimères ou trimères comprise entre 1,3/1 et 1,7/1

### Spécifications

| Performance | Norme d'essai | Commentaires | Spécifications |
|---|---|---|---|
| Indentation type B (1/10ml) | NFT 66-002 | Ce test permet de mesurer la montée en cohésion des ECF au jeune âge | < 50 |

## Revendications

1. Liant réactif à durcissement à froid consistant en :
- un liant de base ayant une viscosité inférieure à 1500 mPa.s à 20°C, constitué par un mélange d'acides gras,
- au moins un adjuvant réactif capable de réagir de manière adéquate avec le liant de base, et
- au moins un activateur capable d'amorcer la réaction.

2. Liant selon la revendication 1 , **caractérisé en ce que** l'adjuvant réactif se présente sous la forme d'une poudre ou sous la forme d'un liquide et est choisi parmi un complexant, un anhydride d'acide, une amine grasse, un sel inorganique de cations et anions mono ou polyvalents, un ciment, un ciment Portland, un ciment à prise rapide, un ciment spécial, de la chaux, du plâtre, de la dolomite, un laitier, un verre, un silicate alcalin, un gel de silice, de l'alun, et leurs mélanges.

3. Liant l'une la revendication 1 ou 2, **caractérisé en ce que** l'activateur est choisi parmi l'eau, un glycol, un alcool gras, un tensio actif, un acide organique ou inorganique, une base, un sel métallique, du soufre et ses composés, un peroxyde, un latex, une dispersion de résine synthétique, et leurs mélanges.

4. Liant selon l'une quelconque des revendications 1 à 3, **caractérisé en ce que** le liant de base comprend :
- au moins un acide gras monocarboxylique, et
- au moins un acide gras polymérisé.

5. Liant selon l'une quelconque des revendications 1 à 4, **caractérisé en ce qu'**il comprend, en poids par rapport au poids total du liant :
- 25 à 98% de liant de base,
- 0,5 à 55% d'adjuvant réactif, et
- 0,5 à 55% d'activateur.

6. Liant selon l'une quelconque des revendications 1 à 5, **caractérisé en ce que**, avant l'application, le liant est présent sous la forme d'une première composante comprenant le liant de base et l'adjuvant réactif, et d'une seconde composante comprenant l'activateur.

7. Liant selon l'une quelconque des revendications 1 à 6, **caractérisé en ce que**, avant l'application, le liant est présent sous la forme d'une première composante comprenant le liant de base, d'une seconde composante comprenant un adjuvant réactif et d'une troisième composante comprenant l'activateur.

8. Liant selon la revendication 4, **caractérisé en ce que** les proportions massiques d'acides gras monocarboxyliques par rapport aux acides gras polymérisés sont comprises entre 1/1 et 2/1.

9. Enrobé à froid comprenant au moins un granulat et un liant réactif selon l'une quelconque des revendications 1 à 8.

10. Enrobé selon la revendication 9, **caractérisé en ce qu'**il comprend, en poids par rapport au poids total de l'enrobé :
- 70 à 96% d'au moins un granulat
- 4 à 30% d'un liant réactif selon l'une quelconque des revendications 1 à 8.

11. Utilisation d'un liant selon l'une quelconque des revendications 1 à 8 pour la fabrication d'un enrobé coulé à froid.

12. Utilisation d'un liant selon l'une quelconque des revendications 1 à 8 pour la fabrication d'asphalte à froid.
